# EUROPÄISCHE PATENTSCHRIFT

(11) **EP 3 887 677 B1**
(45) Veröffentlichungstag und Bekanntmachung des Hinweises auf die Patenterteilung: **01.03.2023**
(21) Anmeldenummer: 19816565.6
(22) Anmeldetag: 28.11.2019
(51) Int. Cl.: F03D 7/04

(54) **VERFAHREN ZUM BETRIEB EINER WINDENERGIEANLAGE, WINDENERGIEANLAGE UND COMPUTERPROGRAMMPRODUKT**
METHOD FOR OPERATING A WIND TURBINE, WIND TURBINE, AND COMPUTER PROGRAM PRODUCT
PROCÉDÉ POUR FAIRE FONCTIONNER UNE ÉOLIENNE, ÉOLIENNE ET PRODUIT PROGRAMME D'ORDINATEUR

(30) Priorität: 28.11.2018 DE 102018009334
(43) Veröffentlichungstag der Anmeldung: 06.10.2021
(73) Patentinhaber: Siemens Gamesa Renewable Energy Service GmbH, 20097 Hamburg (DE)
(72) Erfinder: WARFEN, Karsten, 23795 Weede / Söhren (DE); GOSCH-PLEß, Timo, 24783 Osterrönfeld (DE)
(74) Vertreter: Glawe, Delfs, Moll
(86) Internationale Anmeldenummer: PCT/EP2019/082939
(87) Internationale Veröffentlichungsnummer: WO 2020/109484

(56) Entgegenhaltungen:
- EP-A1- 2 821 637
- EP-A1- 2 981 710
- US-A1- 2010 014 969
- US-A1- 2015 086 356

## Beschreibung

Die Erfindung betrifft ein Verfahren zum Betrieb einer Windenergieanlage und eine zur Durchführung des Verfahrens ausgebildete Windenergieanlage sowie ein entsprechendes Computerprogrammprodukt.

Bei bekannten Windenergieanlagen lässt sich ein um eine im Wesentlichen horizontale

Achse drehbarer Rotor mit daran zur Einstellung des Blattwinkels drehbar angeordneten Rotorblättern durch Wind in Rotation versetzen. Der Rotor ist dabei - ggf. über eine Rotorwelle und/oder ein Getriebe - mit einem Generator zur Umwandlung der Rotationsenergie des Rotors in elektrische Energie verbunden. Die leistungsübertragenden drehenden Komponenten vom Rotor bis zum Generator werden zusammen als Triebstrang bezeichnet und sind regelmäßig in einer drehbar auf einem Turm montierten Gondel angeordnet.

Im Betrieb der Windenergieanlage tritt aufgrund des auf den Rotor einwirkenden Windes neben der gewünschten Rotation des Rotors auch noch eine Schubkraft auf, die vollständig vom Turm der Windenergieanlage aufgenommen werden muss. Aufgrund der bei Interaktion des Rotors mit dem Wind regelmäßig auftretenden Turbulenzen ist die aufzunehmende Schubkraft dynamisch schwankend, was eine nicht unerhebliche Belastung für den Turm darstellt. Bei bislang bekannten Verfahren zum Betrieb von Windenergieanlagen, deren Zielsetzung die optimale Energieausbeute bei Einhaltung der Betriebsgrenzen der Komponenten des Triebstrangs ist, können zeitweise sehr hohe Schubbelastungen auftreten. Der Turm muss auf diese hohen Schubbelastungen ausgelegt sein, damit es bei deren Auftreten zu keiner unmittelbaren Beschädigung des Turmes oder zu einer unerwünschten Reduzierung dessen Lebensdauer kommt. Auf entsprechend hohe Schubbelastungen ausgelegte Türme sind aber in der Regel kostenintensiv.

In EP 2 604 853 A1 ist ein Verfahren zum Betrieb einer Windenergieanlage offenbart, bei dem u. a. ein Schubkraftsollwert ermittelt wird, der bei der Steuerung der Anlage im Sinne eines zulässigen Maximalwerts für die Schubkraft berücksichtigt wird. Dadurch sollen übermäßige Schubbelastungen von der Windenergieanlage ferngehalten werden. Auch wird ein Zusammenhang zwischen Schubkraft einer Windenergieanlage und der Nachlaufturbulenz beschrieben, wobei die Reduzierung der Schubkraft einer Windenergieanlage die Anströmung einer im Nachlauf angeordneten zweiten Turbine verbessern kann. Nachteilig an diesem Stand der Technik ist die zur Ermittlung des Schubkraftsollwerts erforderliche Berechnung, die auf Absolutwerte von teilweise gemessenen Betriebsparametern abstellt, sodass sie grundsätzlich anfällig für Messfehler ist.

EP2821637A1, EP298171 0A1 und US2015/086356A1 sind weitere relevante Dokumente des Standes der Technik.

Aufgabe der Erfindung ist es ein Verfahren zum Betrieb einer Windenergieanlage und eine entsprechend ausgebildete Steuerungsvorrichtung zu schaffen, bei der die Nachteile aus dem Stand der Technik nicht mehr oder nur noch in vermindertem Umfang auftreten.

Gelöst wird diese Aufgabe durch ein Verfahren gemäß dem Hauptanspruch sowie eine Windenergieanlage und ein Computerprogrammprodukt gemäß den nebengeordneten Ansprüchen. Vorteilhafte Weiterbildungen sind Gegenstand der abhängigen Ansprüche.

Demnach betrifft die Erfindung ein Verfahren zum Betrieb einer Windenergieanlage umfassend einen Rotor mit über eine Anlagensteuerung winkelverstellbaren Rotorblättern, bei der eine den momentanen Schub des Rotors widerspiegelnde Zustandsgröße erfasst wird, mit den Schritten:
a) Ermitteln eines Kurzzeitmittelwerts der Zustandsgröße;
b) Ermitteln der Differenz von Kurzzeitmittelwert der Zustandsgröße und der erfassten momentanen Zustandsgröße;
c) Ermitteln eines ersten Sollblattwinkelkorrekturwerts aus der ermittelten Differenz; und
d) Berücksichtigung des Sollblattwinkelkorrekturwerts bei der Blattwinkelverstellung durch die Anlagensteuerung.

Weiterhin betrifft die Erfindung auch eine Windenergieanlage umfassend einen Rotor mit mehreren, hinsichtlich des Blattwinkels einstellbaren Rotorblättern, der drehbar an einer drehbar auf einem Turm angeordneten Gondel angeordnet und über einen Triebstrang mit einem in der Gondel angeordneten Generator zur Umwandlung von auf den Rotor einwirkender Windenergie in elektrische Energie verbunden ist, und eine Anlagensteuerung zur Steuerung der Windenergieanlage und deren Komponenten, wobei die Anlagensteuerung zur Durchführung eines der erfindungsgemäßen Verfahren ausgebildet ist.

Auch betrifft die Erfindung ein Computerprogrammprodukt umfassend Programmteile, welche, wenn geladen in einem Computer, vorzugsweise die Anlagensteuerung einer Windenergieanlage, zur Durchführung des erfindungsgemäßen Verfahrens ausgelegt sind.

Zunächst werden einige in Zusammenhang mit der Erfindung verwendete Begriffe erläutert.

Eine "Zustandsgröße" ist eine messbare oder aus Messwerten ermittelbare Größe, die den momentanen Zustand der in Betrieb befindlichen Windenergieanlage wiedergibt. Bei einer Zustandsgröße kann es sich insbesondere um einen Messwert oder einen aus Messwerten berechneten Wert handeln, der von der Anlagensteuerung der Windenergieanlage erfasst und zur letztendlichen Steuerung der Windenergieanlage herangezogen wird. Es ist aber auch möglich, dass die Zustandsgröße für das vorliegende Verfahren separat ermittelt wird.

Eine momentane Zustandsgröße gilt dann als "den momentanen Schub des Rotors widerspiegelnd", wenn aus einer Veränderung der Zustandsgröße mit an Sicherheit grenzender Wahrscheinlichkeit auf eine Veränderung des Schubs geschlossen werden kann. Indem sowohl Zustandsgröße als auch Schub des Rotors "momentan" sind, kommt zum Ausdruck, dass die Veränderung der Zustandsgröße auf eine gleichzeitige Veränderung des Rotorschubs schließen lässt; insbesondere ein Nachlaufen der Veränderung der Zustandsgröße, bei der die fragliche Veränderung erst in einigem zeitlichen Abstand zu einer Veränderung des Schubs des Rotors erfolgt, fällt nicht hierunter. Dabei ist weder erforderlich, dass aus der Zustandsgröße unmittelbar der Schub des Rotors als absoluter Wert berechnet werden kann, noch das zwischen der Veränderung der Zustandsgröße und der Veränderung des Rotorschubs eine unmittelbare Proportionalität besteht. Es kann bereits ausreichend sein, wenn aufgrund der Veränderung der Zustandsgröße feststellbar ist, ob sich der Schub des Rotors erhöht oder verringert hat, und sich eine Größenordnung der Veränderung des Rotors annehmen lässt.

Bei einem "Kurzzeitmittelwert" handelt es sich um einen Mittelwert, der über eine gleitende in die Vergangenheit gerichtete, mitlaufende Zeitspanne einer grundsätzlich dauerhaft oder in kurzen Abständen wiederholt ermittelten Größe ausgehend von dem zuletzt ermittelten Wert dieser Größe berechnet wird. Der Kurzzeitmittelwert wird also immer über die zuletzt - innerhalb der vorgegebenen Zeitspanne - ermittelten Werte der fraglichen Größe ermittelt. Dabei wird bevorzugt das arithmetische Mittel der fraglichen Werte berechnet.

Bei einem "Sollblattwinkelkorrekturwert" handelt es sich um einen Wert, der von der Anlagensteuerung der Windenergieanlage bei der regelmäßig erfolgenden Ermittlung eines Blattwinkelsollwertes, der dann von einer geeigneten Teilsteuerung umgesetzt wird, oder bei der Ansteuerung der Blattwinkelverstellung unmittelbar berücksichtigt wird. Bspw. kann es sich bei dem Sollblattwinkelkorrekturwert um ein Blattwinkel-Delta handeln, der einem auf bekannte Weise durch eine Anlagensteuerung ermittelten Blattwinkelsollwert hinzuaddiert wird.

Die Erfindung hat erkannt, dass aus dem Vergleich eines Zustandswertes, der grundsätzlich Rückschlüsse auf den momentanen Schub des Rotors zulässt, mit seinem Kurzzeitmittelwert auf einfache Weise ein Sollblattwinkelkorrekturwert ermittelt werden kann, dessen Berücksichtigung durch die Anlagensteuerung zu einer Reduktion des Schubs des Rotors und damit der Schubbelastung des Turms führt. Da sich der Kurzzeitmittelwert sowie die genannte Differenz sehr einfach ermitteln lässt und unter der Annahme, dass sich der Sollblattwinkelkorrekturwert ebenfalls einfach auf Basis der ermittelten Differenz ermitteln lässt, kann der Sollblattwinkelkorrekturwert bei Veränderung der Zustandsgröße sehr schnell ermittelt und durch die Anlagensteuerung berücksichtigt werden. Im einfachsten Fall wird bspw. die ermittelte Differenz aus Zustandsgröße und deren Kurzzeitmittelwert lediglich mit einem Verstärkungsfaktor multipliziert, um den gewünschten Sollblattwinkelkorrekturwert zu erhalten. Indem bei dem erfindungsgemäßen Verfahren ausschließlich auf die besagte Differenz und somit nicht auf den Absolutwert des Zustandswertes ankommt, ist das erfindungsgemäße Verfahren äußerst robust gegenüber evtl. auftretendem Drift bei der Erfassung von für den Zustandswert erforderlichen Messwerten.

Es ist bevorzugt, wenn parallel zu den Schritten a) bis c) ein zweiter Sollblattwinkelkorrekturwert aus dem Gradient der Zustandsgröße - also die partielle Ableitung nach der Zeit - ermittelt und mit dem ersten Sollblattwinkelkorrekturwert verknüpft wird. Durch einen entsprechenden zweiten Sollblattwinkelkorrekturwert können schnelle Veränderungen der Zustandsgröße, die sich aufgrund der Ermittlung des Kurzzeitmittelwerts nicht oder nur mit kleiner Verzögerung im ersten Sollblattwinkelkorrekturwert abbilden, unmittelbar erfasst und entsprechend durch die Anlagensteuerung berücksichtigt werden. Es ist bevorzugt, wenn der ermittelte Gradient der Zustandsgröße zunächst geglättet wird und/oder anschließend mit einem Verstärkungsfaktor zum Sollblattwinkelkorrekturwert multipliziert wird.

Die Verknüpfung der beiden Sollblattwinkelkorrekturwerte kann durch Addition oder (ggf. gewichtete) Mittelwertbildung erreicht werden, sodass der Anlagensteuerung nur ein einzelner Sollblattwinkelkorrekturwert übermittelt und von dieser berücksichtigt werden muss.

Bei der erfassten Zustandsgröße kann es sich um eine in direktem Zusammenhang mit dem Schub stehende Messgröße, wie eine Rotorblattbelastung oder eine Axialbelastung an der Rotorwelle, dem Getriebe oder der Getriebeaufhängung handeln, da diese in einem direkten zeitlichen Zusammenhang mit dem Rotorschub stehen. Messgrößen wie Gondel- oder Turmkopfbeschleunigungen oder die Turmbiegung sind nicht geeignet, da sie zu stark von den Turmeigenfrequenzen dominiert und somit verfälscht werden. Ebenso wenig ist die Windgeschwindigkeit geeignet, da sie als Momentanwert nur punktförmig gemessen werden kann und somit nicht für den gesamten Rotor repräsentativ ist.

Bei der erfassten Zustandsgröße kann es sich bevorzugt um die momentane Rotorblattbelastung wenigstens eines Rotorblattes, die vorzugsweise in Form von Blattbiegemomenten, vorzugsweise an der Rotorblattwurzel, erfasst wird, handeln. Werden individuelle Rotorblattbelastungen von mehr als einem Rotorblatt, vorzugsweise von allen Rotorblättern des Rotors erfasst, können die individuellen Rotorblattbelastungen zu einer einzelnen Rotorblattbelastung summiert oder gemittelt werden.

Alternativ dazu ist es möglich, dass die erfasste Zustandsgröße das momentane Rotordrehmoment ist. Das momentane Rotordrehmoment lässt sich bspw. aus der momentanen Drehzahl und der momentanen Leistung der Windenergieanlage ermitteln. Vorzugsweise werden dabei auch Beschleunigungsvorgänge des Rotors in Drehrichtung und der damit drehverbundenen Komponenten des Triebstrangs berücksichtigt.

In einer bevorzugten Ausführungsform wird zusätzlich zum Rotordrehmoment auch noch die Rotordrehzahl und der Rotorblatteinstellwinkel der Rotorblätter als Zustandsgröße erfasst. Aus den erfassten Zustandsgrößen Rotor-Drehmoment, -drehzahl und -blattwinkel wird dann eine Zustandsgröße zur Durchführung des erfindungsgemäßen Verfahrens gebildet.

Es ist bevorzugt, wenn der Kurzzeitmittelwert über einen mitwandernden Zeitraum von 3 bis 20 s, vorzugsweise von 8 bis 15 s ermittelt wird. Es hat sich gezeigt, dass bei einem entsprechend gewählten Zeitraum für den Kurzzeitmittelwert einerseits etwaige Böen nicht auf Kosten des Energieertrags der Windenergieanlage vollständig "weggeregelt" werden, wodurch die durch eine Böe zusätzlich eingebrachte Energie keine zeitweilige Erhöhung der erzeugten Leistung zur Folge hätte, andererseits aber Belastungsspitzen u. a. im Turm und in den Rotorblättern wirksam reduziert werden können. Diese Mittelungszeiten sind unter anderem von der standortspezifischen mittleren Böenfrequenz abhängig und sollten insofern standortspezifisch optimiert werden.

Vorzugsweise wird die erfasste Zustandsgröße vor Ermittlung des Kurzzeitmittelwerts gefiltert, wobei dann auch die erfasste momentane Zustandsgröße bei der Differenzbildung die so gefilterte Zustandsgröße ist. Durch eine entsprechende Filterung können bspw. etwaiges Rauschen oder sonstige hochfrequente Störungen, die bei der Ermittlung der Zustandsgröße auf Basis von Messwerten auftreten können, effektiv beseitigt werden, wodurch das erfindungsgemäße Verfahren robuster gegenüber solchen Störungen wird.

Die maximale zeitliche Verzögerung der momentanen Zustandsgröße durch die Filterung ist bevorzugt geringer, als die Verzögerung durch eine Mittelung über 0,5, insbesondere 0,3sec. Nur durch derart unverzögerte Momentanwerte der Zustandsgröße ist die Wirkungsweise des erfindungsgemäßen Verfahrens sicher zu stellen.

Es ist bevorzugt, wenn das Ermitteln des ersten Sollblattwinkelkorrekturwerts eine Multiplikation der ermittelten Differenz mit einem Verstärkungsfaktor umfasst. Weiter bevorzugt ist, wenn das Ermitteln des ersten Sollblattwinkelkorrekturwerts ausschließlich aus einer Multiplikation der ermittelten Differenz mit einem Verstärkungsfaktor besteht.

Zur Erläuterung der erfindungsgemäßen Windenergieanlage und des erfindungsgemäßen Computerprogrammproduktes wird auf die vorstehenden Ausführungen verwiesen.

Die Erfindung wird nun anhand einer bevorzugten Ausführungsform unter Bezugnahme auf die beigefügten Zeichnungen beispielhaft beschrieben. Es zeigen:
1: eine schematische Darstellung der Gondel einer zur Durchführung des erfindungsgemäßen Verfahrens ausgebildeten erfindungsgemäßen Windenergieanlage; und
2: die Prinzipskizze einer möglichen ersten Durchführung des erfindungsgemäßen Verfahrens; und
3: die Prinzipskizze einer möglichen zweiten Durchführung des erfindungsgemäßen Verfahrens.

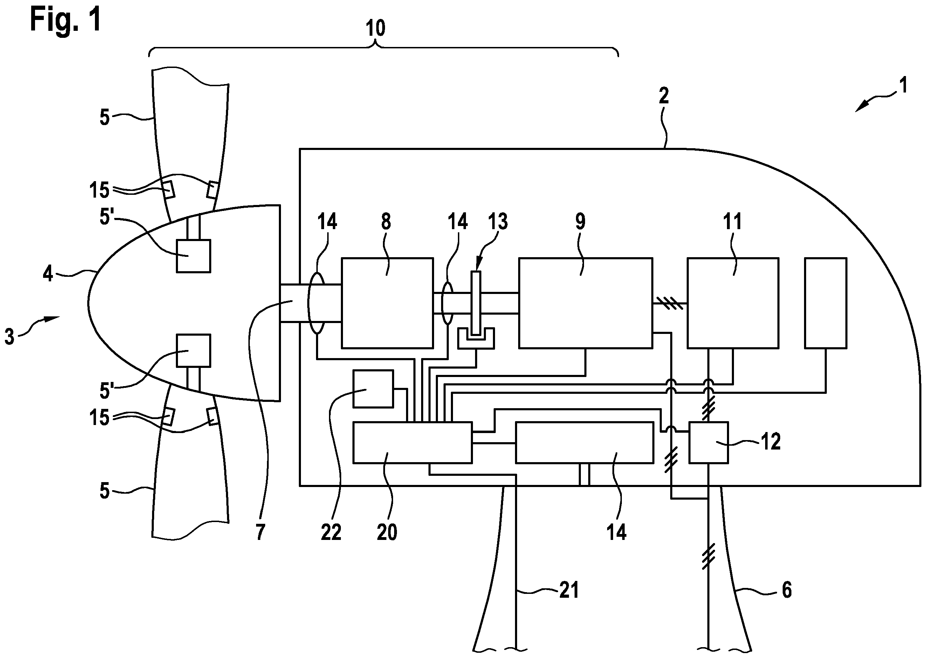

In Figur 1 ist die Gondel 2 einer erfindungsgemäßen und damit zur Durchführung des erfindungsgemäßen Verfahrens ausgebildeten Windenergieanlage 1 schematisch dargestellt. Die Windenergieanlage 1 umfasst einen Rotor 3 mit insgesamt drei, über Blattwinkelverstelleinrichtungen 5' drehbar an einer Rotornabe 4 befestigten Rotorblättern 5. Der Rotor 3 ist drehbar an der Gondel 2 angeordnet, die wiederum über einen Azimutantrieb 14 drehbar um eine senkrechte Achse auf einem Turm 6 angeordnet.

Die Rotornabe 4 ist über eine Rotorwelle 7 mit zwischengeschaltetem Getriebe 8 mit einem Generator 9 zur Umwandlung von auf den Rotor 3 einwirkender Windenergie in elektrische Energie verbunden. Die leistungsübertragenden Komponenten vom Rotor 3 bis zum Generator 9 - also insbesondere die Rotorwelle 7 und das Getriebe 8 - bilden den Triebstrang 10.

Der Generator 9 ist im dargestellten Ausführungsbeispiel ein doppelt gespeister Asynchrongenerator, bei dem ein Teil der erzeugten Leistung direkt, ein anderer Teil der Leistung über einen Umrichter 11 und ein Schaltelement 12 zu einem am Fuß des Turmes 6 befindlichen Transformators (nicht dargestellt) geleitet und von dort in ein öffentliches Versorgungsnetz eingespeist wird.

Zwischen dem Getriebe 7 und dem Generator 9 ist weiterhin eine Bremse 13 vorgesehen, mit welcher eine Drehbewegung des Triebstrangs 10 abgebremst und der Rotor 3 bei Bedarf arretiert werden kann. Darüber hinaus sind Messaufnehmer 14 zur Ermittlung der Rotordrehzahl bzw. der Drehzahl der Welle 7 zwischen Getriebe 8 und Generator 9 vorgesehen. An den Rotorblättern 5 sind im Bereich der Anbindung an die Rotornabe 4 Messaufnehmer 15 zur Ermittlung der Rotorblattbiegemomente vorgesehen.

Die Windenergieanlage 1 und ihre sämtlichen Komponenten werden durch die computerbasierte Anlagensteuerung 20 gesteuert. Dazu werden der Anlagensteuerung 20 sämtliche, in der Windenergieanlage 1 erfassten Messwerte sowie über eine Datenleitung 21 Sollwerte, bspw. von einem Netzbetreiber, zugeführt und mit Hilfe von in einem Speicher 22 abgelegten, dem Fachmann grundsätzlich bekannten Regelungsalgorithmen in Steuersignale umgesetzt, die dann wiederum an die verschiedenen Komponenten der Windenergieanlage 1 abgegeben werden. Die Anlagensteuerung 20 ermittelt in einem ersten Teil auf Basis der vorliegenden Informationen Sollwerte für einzelne von ihr regelbare Parameter des Betriebs der Windenergieanlage 1, die dann von anderen Teilen der Anlagensteuerung 20 derart umgesetzt werden, dass die entsprechenden Ist-Werte den Sollwerten entsprechen.

Erfindungsgemäß ist die Anlagensteuerung 20 zur Durchführung des nachfolgend näher beschriebenen erfindungsgemäßen Verfahrens ausgebildet, wozu ein dazu ausgebildetes Computerprogrammprodukt im Speicher 22 abgelegt und von der Anlagensteuerung 20 ausgeführt wird.

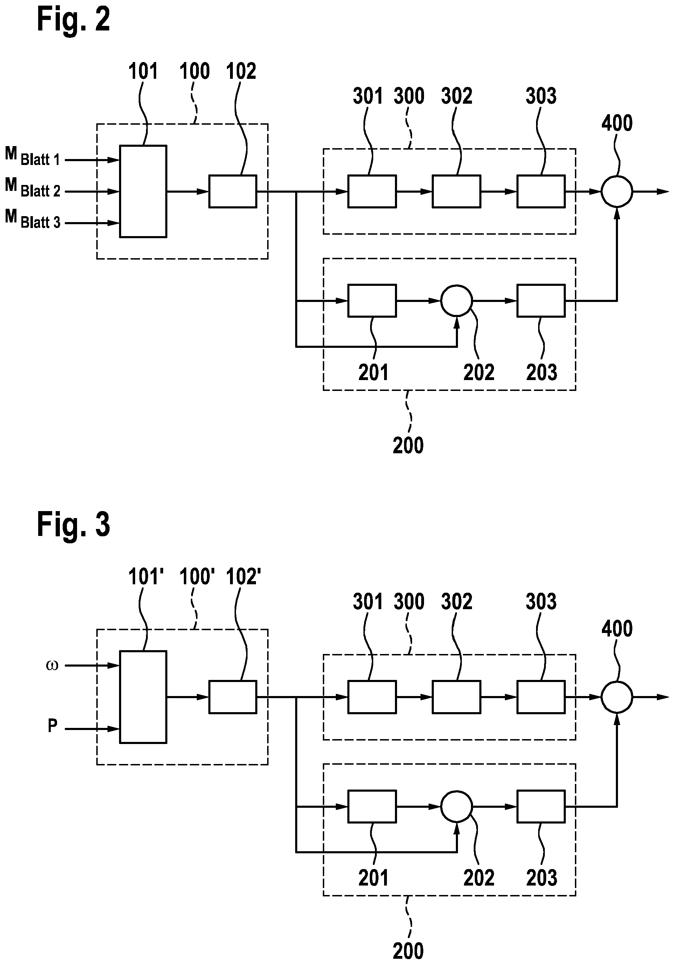

In Figur 2 ist eine Prinzipskizze einer ersten Umsetzung des erfindungsgemäßen Verfahrens in der Anlagensteuerung 20 gezeigt. Dabei beschränkt sich die Darstellung auf den für die Durchführung des Verfahrens wesentlichen Teil der Anlagensteuerung 20.

Im Funktionsblock 100 wird eine Zustandsgröße ermittelt, die den momentanen Schub des Rotors 3 widerspiegelt. Dazu werden die von den Messaufnehmern 15 an den einzelnen Rotorblättern 5 erfassend Rotorblattbiegemomente *M*_{*Blatt*1...3} in dem Funktionsglied 101 aufsummiert. Dabei kann grundsätzlich auf eine Kalibrierung der Messwerte, damit diese den tatsächlichen Absolutwert der Rotorblattbiegemomente liefern, verzichtet werden. Für das erfindungsgemäße Verfahren kommt es nämlich nicht auf die Absolutwerte, sondern nur auf die relative Veränderung der Zustandsgröße an. Die aus den Rotorblattbiegemomenten ermittelte Zustandsgröße wird einem Filter 102 zugeführt, um hochfrequente Störungen und Rauschen der Messaufnehmer 15 herauszufiltern.

Die so ermittelte Zustandsgröße wird anschließend parallel den Funktionsblöcken 200 und 300 zugeführt.

Im Funktionsblock 200 wird durch das Funktionsglied 201 ein Kurzzeitmittelwert der zugeführten Zustandsgröße ermittelt, wobei der Zeitraum zur Bildung des Kurzzeitmittelwerts 10-12 s beträgt.

In Glied 202 wird die Differenz aus dem durch das Funktionsglied 201 ermittelten Kurzzeitmittelwert und der momentanen, vom Funktionsblock 100 zur Verfügung gestellte Zustandsgröße ermittelt.

Im Funktionsglied 203 wird die so ermittelte Differenz mit einem Verstärkungsfaktor multipliziert, woraus sich dann ein erster Sollblattwinkelkorrekturwert ergibt.

Parallel zu dem Funktionsblock 200 wird in Funktionsblock 300 der Gradient der Zustandsgröße durch das Funktionsglied 301 ermittelt, anschließend durch das Funktionsglied 302 geglättet, bevor es abschließend im Funktionsglied 303 mit einem Verstärkungsfaktor multipliziert wird, woraus sich dann ein zweiter Sollblattwinkelkorrekturwert ergibt.

Der erste Sollblattwinkelkorrekturwert aus dem Funktionsblock 200 und der zweite Sollblattwinkelkorrekturwert aus dem Funktionsblock 300 werden in Glied 400 summiert und anschließend der Anlagensteuerung 20 zur Berücksichtigung bei der Blattwinkelsteuerung zugeleitet. Insbesondere wenn die Anlagensteuerung 20 einen Blattwinkelsollwert ermittelt, der dann von einem dafür vorgesehenen Teil der Anlagensteuerung 20 umgesetzt wird, kann der erfindungsgemäße ermittelte Sollblattwinkelkorrekturwert bspw. durch einfache Addition auf den Blattwinkelsollwert berücksichtigt werden.

In Figur 3 ist eine Prinzipskizze einer zweiten Umsetzung des erfindungsgemäßen Verfahrens in der Anlagensteuerung 20 gezeigt. Diese entspricht bis auf die verwendete Zustandsgröße derjenigen aus Figur 2, weshalb auf die dortigen Ausführungen verwiesen wird.

Bei der Umsetzung in Figur 1 wird durch den Funktionsblock 100' als Zustandsgröße das Rotordrehmoment, also das momentan von dem Rotor an den Triebstrang übertragene Drehmoment, ermittelt. Dieses wird vom Funktionsglied 101' auf Basis der von den Messaufnehmern 14 gemessenen Drehzahl *ω* sowie der letztendlich vom Generator erzeugten elektrischen Leistung P berechnet und anschließend durch das Glied 102' gefiltert, bevor es den Funktionsblöcken 200 und 300 zur Verfügung gestellt wird.

Die Funktionsblöcke 200 und 300 sind identisch zu denjenigen aus Figur 2 aufgebaut. Lediglich die Verstärkungsfaktoren in den Funktionsgliedern 203 und 303 müssen ggf. an die geänderte Zustandsgröße angepasst werden, um einen wirksamen Sollblattwinkelkorrekturwert ermitteln zu können.

Wie aus der vorstehenden Beschreibung unmittelbar hervorgeht, kommt es für die Ermittlung des Sollblattwinkelkorrekturwerts zu keinem Zeitpunkt auf den absoluten Wert der Zustandsgröße, sondern lediglich auf die relative Veränderung über die Zeit an. Dadurch ist das erfindungsgemäße Verfahren äußerst robust bspw. gegenüber langsamen Drifts der von den Messwertaufnehmern ermittelten Werte.

## Patentansprüche

1. Verfahren zum Betrieb einer Windenergieanlage (1) umfassend einen Rotor (3) mit über eine Anlagensteuerung (20) winkelverstellbaren Rotorblättern (5), bei der eine den momentanen Schub des Rotors (3) widerspiegelnde Zustandsgröße erfasst wird, mit den Schritten:
a) Ermitteln eines Kurzzeitmittelwerts der Zustandsgröße (Funktionsglied 201);
b) Ermitteln der Differenz von Kurzzeitmittelwert der Zustandsgröße und der erfassten momentanen Zustandsgröße (Funktionsglied 202);
c) Ermitteln eines ersten Sollblattwinkelkorrekturwerts aus der ermittelten Differenz (Funktionsglied 203);
d) Berücksichtigung des Sollblattwinkelkorrekturwerts bei der Blattwinkelverstellung durch die Anlagensteuerung (20).

2. Verfahren nach Anspruch 1,
**dadurch gekennzeichnet, dass**
parallel zu den Schritten a) bis c) ein zweiter Sollblattwinkelkorrekturwert aus dem Gradient der Zustandsgröße ermittelt (Funktionsblock 300) und mit dem ersten Sollblattwinkelkorrekturwert verknüpft wird (Funktionsglied 400).

3. Verfahren nach einem der vorhergehenden Ansprüche,
**dadurch gekennzeichnet, dass**
die erfasste Zustandsgröße die momentane Rotorblattbelastung ist, die vorzugsweise in Form von Blattbiegemomenten, vorzugsweise an der Rotorblattwurzel, erfasst wird.

4. Verfahren nach einem der vorhergehenden Ansprüche,
**dadurch gekennzeichnet, dass**
die erfasste Zustandsgröße das momentane Rotordrehmoment ist.

5. Verfahren nach einem der vorhergehenden Ansprüche,
**dadurch gekennzeichnet, dass**
der Kurzzeitmittelwert über einen mitwandernden Zeitraum von 3 bis 20 s, vorzugsweise von 8 bis 15 s ermittelt wird.

6. Verfahren nach einem der vorhergehenden Ansprüche,
**dadurch gekennzeichnet, dass**
die erfasste Zustandsgröße vor Ermittlung des Kurzzeitmittelwerts gefiltert wird (Funktionsglieder 102, 102') und die erfasste momentane Zustandsgröße bei der Differenzbildung (Funktionsglied 202) die gefilterte Zustandsgröße ist.

7. Verfahren nach einem der vorhergehenden Ansprüche,
**dadurch gekennzeichnet, dass**
das Ermitteln des ersten Sollblattwinkelkorrekturwerts (Funktionsglied 203) eine Multiplikation der ermittelten Differenz mit einem Verstärkungsfaktor umfasst.

8. Windenergieanlage (1) umfassend einen Rotor (3) mit mehreren, hinsichtlich des Blattwinkels einstellbaren Rotorblättern (5), der drehbar an einer drehbar auf einem Turm (6) angeordneten Gondel (2) angeordnet und über einen Triebstrang (10) mit einem in der Gondel (2) angeordneten Generator (9) zur Umwandlung von auf den Rotor (3) einwirkender Windenergie in elektrische Energie verbunden ist, und eine Anlagensteuerung (20) zur Steuerung der Windenergieanlage (1) und deren Komponenten,
**dadurch gekennzeichnet, dass**
die Anlagensteuerung (20) zur Durchführung des Verfahrens nach einem der vorhergehenden Ansprüche ausgebildet ist.

9. Computerprogrammprodukt umfassend Programmteile, welche, wenn geladen in einem Computer, vorzugsweise die Anlagensteuerung (20) einer Windenergieanlage (1), zur Durchführung des Verfahrens nach einem der Ansprüche 1 bis 7 ausgelegt sind.

## Claims

1. Method for operating a wind turbine (1) comprising a rotor (3) with rotor blades (5) of which the angle can be adjusted by means of a turbine controller (20), in which a state variable which reflects the current thrust of the rotor (3) is detected, comprising the steps of:
a) determining a short-term mean value of the state variable (functional element 201);
b) determining the difference between the short-term mean value of the state variable and the detected current state variable (functional element 202);
c) determining a first target blade angle correction value from the determined difference (functional element 203) ;
d) the turbine controller (20) taking into account the target blade angle correction value for the blade angle adjustment.

2. Method according to Claim1,
**characterized in that**,
parallel to steps a) to c), a second target blade angle correction value is determined from the gradient of the state variable (function block 300) and is combined with the first target blade angle correction value (functional element 400).

3. Method according to either of the preceding claims,
**characterized in that**
the detected state variable is the current rotor blade loading which is preferably detected in the form of blade bending torques, preferably at the rotor blade root.

4. Method according to one of the preceding claims,
**characterized in that**
the detected state variable is the current rotor torque.

5. Method according to one of the preceding claims,
**characterized in that**
the short-term mean value is determined over a moving time period of from 3 to 20 s, preferably of from 8 to 15 s.

6. Method according to one of the preceding claims,
**characterized in that**
the detected state variable is filtered before determining the short-term mean value (functional elements 102, 102') and the detected current state variable for the difference calculation (functional element 202) is the filtered state variable.

7. Method according to one of the preceding claims,
**characterized in that**
determining the first target blade angle correction value (functional element 203) comprises multiplying the determined difference by a gain factor.

8. Wind turbine (1) comprising a rotor (3) with a plurality of rotor blades (5) of which the blade angle can be set, which rotor is arranged in a rotatable manner on a nacelle (2) which is arranged in a rotatable manner on a tower (6) and which rotor is connected by means of a drive train (10) to a generator (9), which is arranged in the nacelle (2), for converting wind energy acting on the rotor (3) into electrical energy, and comprising a turbine controller (20) for controlling the wind turbine (1) and its components,
**characterized in that**
the turbine controller (20) is designed to carry out the method according to one of the preceding claims.

9. Computer program product comprising program parts which, when loaded in a computer, preferably the turbine controller (20) of a wind turbine (1), are designed to carry out the method according to one of Claims 1 to 7.

## Revendications

1. Procédé permettant de faire fonctionner une éolienne (1) comprenant un rotor (3) pourvu de pales de rotor (5) dont l'angle peut être ajusté par l'intermédiaire d'un dispositif de commande système (20), dans laquelle une grandeur d'état reflétant la poussée instantanée du rotor (3) est détectée, comprenant les étapes consistant à :
a) déterminer une valeur moyenne à court terme de la grandeur d'état (module de fonction 201) ;
b) déterminer la différence entre la valeur moyenne à court terme de la grandeur d'état et la grandeur d'état instantanée détectée (module de fonction 202) ;
c) déterminer une valeur de correction d'angle de pale de consigne à partir de la différence déterminée (module de fonction 203) ;
d) tenir compte de la valeur de correction d'angle de pale de consigne pour l'ajustement d'angle de pale par le dispositif de commande système (20).

2. Procédé selon la revendication 1, **caractérisé en ce qu'**en parallèle aux étapes a) à c), une deuxième valeur de correction d'angle de pale de consigne est déterminée à partir du gradient de la grandeur d'état (bloc de fonctions 300) et est reliée à la première valeur de correction d'angle de pale de consigne (module de fonction 400).

3. Procédé selon l'une quelconque des revendications précédentes, **caractérisé en ce que** la grandeur d'état détectée est la charge de pale de rotor instantanée qui est détectée de préférence sous la forme de moments de flexion de la pale, de préférence au niveau de la base de pale de rotor.

4. Procédé selon l'une quelconque des revendications précédentes, **caractérisé en ce que** la grandeur d'état détectée est le couple de rotor instantané.

5. Procédé selon l'une quelconque des revendications précédentes, **caractérisé en ce que** la valeur moyenne à court terme est déterminée pendant une période mobile de 3 à 20 s, de préférence de 8 à 15 s.

6. Procédé selon l'une quelconque des revendications précédentes, **caractérisé en ce que** la grandeur d'état détectée est filtrée avant la détermination de la valeur moyenne à court terme (modules de fonction 102, 102') et la grandeur d'état instantanée détectée est la grandeur d'état filtrée lors de la soustraction (module de fonction 202).

7. Procédé selon l'une quelconque des revendications précédentes, **caractérisé en ce que** la détermination de la première valeur de correction d'angle de pale de consigne (module de fonction 203) comprend une multiplication de la différence déterminée par un facteur de gain.

8. Eolienne (1), comprenant un rotor (3) pourvu de plusieurs pales de rotor (5) dont l'angle de pale est réglable, qui est disposé en rotation sur une nacelle (2) disposée en rotation sur un mât (6), et qui est relié par une chaîne cinématique (10) à un générateur (9) disposé dans la nacelle (2) pour convertir de l'énergie éolienne agissant sur le rotor (3) en énergie électrique, et comprenant un dispositif de commande système (20) pour commander l'éolienne (1) et ses composants,
**caractérisée en ce que** le dispositif de commande système (20) est réalisé pour exécuter le procédé selon l'une quelconque des revendications précédentes.

9. Produit de programme informatique, comprenant des parties de programme qui, lorsqu'elles sont chargées sur un ordinateur, de préférence sur le dispositif de commande système (20) d'une éolienne (1), sont conçues pour exécuter le procédé selon l'une quelconque des revendications 1 à 7.
